(19) Europäisches Patentamt
European Patent Office
Office européen des brevets

(11) Publication number: **0 509 429 A1**

## (12) EUROPEAN PATENT APPLICATION

(21) Application number: **92106358.2**

(22) Date of filing: **13.04.92**

(51) Int. Cl.⁵: **A01K 87/00**

(30) Priority: **15.04.91 JP 24999/91 U**

(43) Date of publication of application:
**21.10.92 Bulletin 92/43**

(84) Designated Contracting States:
**AT BE CH DE DK ES FR GB GR IT LI LU MC NL PT SE**

(71) Applicant: **SHIMANO INC.**
**77, Oimatsucho 3-cho, Sakai-shi**
**Osaka(JP)**

(72) Inventor: **Matsumoto, Akihiko**
**10-108, Kamotani-dai 3-2**
**Sakai-shi, Osaka(JP)**

(74) Representative: **Säger, Manfred, Dipl.-Ing.**
**Richard-Strauss-Strasse 56**
**W-8000 München 80(DE)**

(54) **Fishing rod.**

(57) A fishing rod comprising forward rod sections (A) including a tip end section (1) and tubular intermediate rod sections (2), the intermediate rod sections being maintained selectively in a position for accommodating the tip end section and in a position outwardly extending the tip end section; a tubular butt end section (3) maintained selectively in a position for accommodating the intermediate rod sections and in a position outwardly extending the intermediate rod sections; and auxiliary add-on rod sections (4) connectable to the butt end section by fitting thereon from a forward end thereof to act as a protective cover for the forward rod sections, and from a rear end thereof to act as an extension from the butt end section.

The auxiliary add-on rod sections (4) include a first auxiliary rod section (5) and a second auxiliary rod section (6) both formed tubular and telescopically slidable relative to each other. The first auxiliary rod section is selectively fixable to a first position contained in the second auxiliary rod section and to a second position projecting from the second auxiliary rod section.

## FIG.1

The present invention relates to a fishing rod comprising a butt end section, forward rod sections including a tip end section and intermediate rod sections, the forward rod sections being maintained selectively in a position extending outwardly from the butt end section and in a position contained in the butt end section, and an auxiliary add-on rod section switchable between an extended position connected to a rear end of the butt end section to provide an increased rod length, and a protective position surrounding a forward portion of the butt end section containing the forward rod sections.

Conventionally, the auxiliary add-on rod section has a fixed length (see Japanese Utility Model Publication No. 1986-31671 and GB 2209913A, for example).

Because of the fixed length, when the auxiliary add-on rod section is set to an extended length for certain fishing conditions, the fishing rod becomes too long and awkward to handle in mountain stream or torrent fishing, for example. Without the add-on rod section, the fishing rod may be too short. Further, it is difficult to find a suitable place for storing the long add-on rod section when out of use, resulting in a handling difficulty.

On the other hand, when the auxiliary add-on rod section is set to a reduced length, it is impossible to use the fishing rod with a sufficient length as desired. In either case, the conventional auxiliary add-on rod section is not satisfactory with respect to convenience of handling

The object of the present invention is to provide a fishing rod having an auxiliary add-on rod section with a simple improvement made in its structure, whereby the add-on rod section is easy to store when removed, and has a length selected as desired when connected to the fishing rod for use, while performing the intrinsic function to protect the tip end and the like when placed in a protective position.

In order to fulfill the above object, a fishing rod according to the present invention, as set out in claim 1, comprises a plurality of auxiliary add-on rod sections telescopically slidable relative to each other between an extended position and a contracted position. This fishing rod has the following functions and effects.

The auxiliary add-on rod sections are extendible and contractible as desired when these rod sections are removed from the butt end section or when they are attached to the butt end section. This construction provides the following advantage. When the auxiliary add-on rod sections are removed from the butt end section, the add-on rod sections may be contracted to facilitate its transport or may be put into a bag or the like without difficulty. The fishing rod may be used without the auxiliary add-on rod sections in fishing in a rocky environment with trees standing in close ranges. When the auxiliary add-on rod sections are attached to the butt end section, the fishing rod may be used in a length selected according to fishing conditions since the auxiliary add-on rod sections themselves have variable lengths.

Further, since the auxiliary rod sections are formed separately from the forward rod sections and butt end section, the auxiliary rod sections may be designed to have a desired cross section. Thus, the auxiliary rod sections may have a shape to facilitate gripping.

When the auxiliary rod sections are contracted and used as a cover for the forward rod sections, a reinforcing effect corresponding to an overlap of the auxiliary rod sections is produced to protect the forward rod sections and butt end section in a non-use position.

In order that the present invention may be understood more clearly, embodiments of the invention will be described hereinafter, by way of example, with reference to the accompanying drawings, in which:-

Fig. 1 is a side view in vertical section of a fishing rod according to the present invention, the fishing rod being in a protective position with auxiliary add-on rod sections contracted,

Fig. 2 is a side view in vertical section of the fishing rod in an extended position with the auxiliary add-on rod sections contracted,

Fig. 3 is a side view in vertical section of the fishing rod in an extended position with the auxiliary add-on rod sections extended,

Fig. 4 is a side view in vertical section of a fishing rod in a further embodiment of the invention, the fishing rod being in a protective position with auxiliary add-on rod sections extended,

Fig. 5 is a side view in vertical section of the fishing rod in the further embodiment, the fishing rod being in an extended position with the auxiliary add-on rod sections extended, and

Fig. 6 is a side view in vertical section of the fishing rod in the further embodiment, the fishing rod being in the extended position with the auxiliary add-on rod sections contracted.

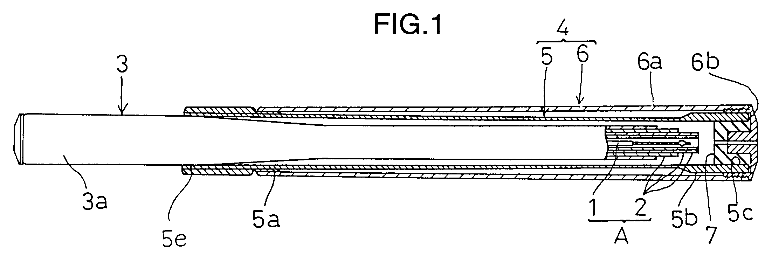

Referring to Fig. 1, a fishing rod embodying the present invention comprises forward rod sections A including a tip rod section 1 and intermediate rod sections 2. The forward rod sections A may be extended outwardly of a butt end section 3 or may be contained in the butt end section 3. The fishing rod further comprises auxiliary add-on rod sections 4 attachable to and removable from the butt end section 3.

The auxiliary add-on rod sections 4 include a first auxiliary rod section 5, and a second auxiliary rod section 6 mounted on the first auxiliary rod section 5. The second auxiliary rod section 6 includes a rod portion 6a and a butt plug 6b screwed to a butt end of the rod portion 6a. A retainer 7 formed of rubber is mounted in the butt plug 6b. The first auxiliary rod section 5 has an annular boss 5a fixed to a forward end thereof, and an annular boss 5b formed peripherally of a rear end thereof. These forward boss 5a and rear boss 5b have outside diameters for pressure contact with inner peripheral walls of the second auxiliary rod section 6. The first auxiliary rod section 5 has an inner peripheral wall 5c at the rear end thereof for pressure contact with an outer peripheral wall of the retainer 7.

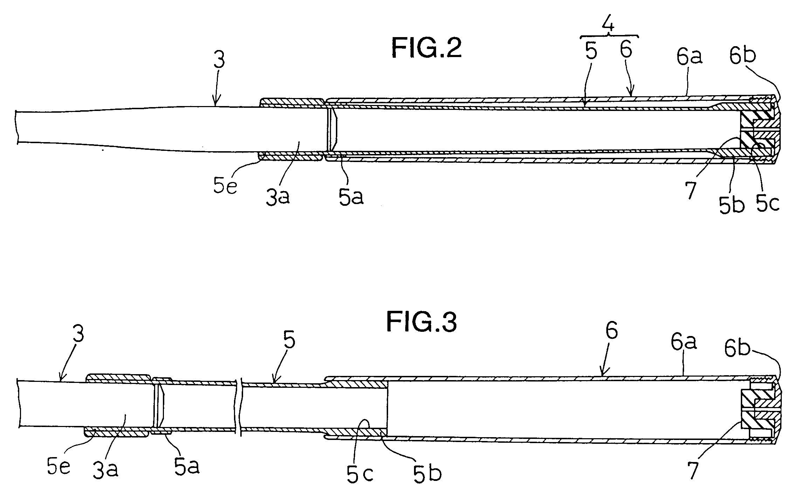

With the second auxiliary rod section 6 surrounding the first auxiliary rod section 5 as shown in Fig. 1, the inner peripheral wall of a forward end of the second auxiliary rod section 6 fits on the forward boss 5a of the first auxiliary rod section 5, and the inner peripheral wall of the rear end of the first auxiliary rod section 5 fits on the outer peripheral wall of the retainer 7. Thus, the auxiliary add-on rod sections 4 are maintained in a contracted state by the engagement in the forward and rearward positions. When the second auxiliary rod section 6 is extended as shown in Fig. 3, the second auxiliary rod section 6 has the inner peripheral wall of the forward end thereof fitting on the rear boss 5b of the first auxiliary rod section 5. This engagement maintains the auxiliary add-on rod sections 4 in the extended state.

The auxiliary add-on rod sections 4 telescopically slidable relative to each other as above are removably attached to the butt end section 3 as shown in Figs. 1 and 2. This fishing rod may be extended for actual fishing, or may be placed in a non-use state for protecting the tip end and the like. Specifically, as shown in Fig. 2, an outer peripheral wall of the first auxiliary rod section 5 may be fitted on a flared rear end 3a of the butt end section 3, with the tip end section 1, intermediate rod sections 2 and butt end section 3 fully extended for use in fishing. Thus, the auxiliary add-on rod sections 4 may be added to increase the rod length. In the non-use position shown in Fig. 1, the tip end section 1 and intermediate rod sections 2 are contained in the butt end section 3, and the auxiliary add-on rod sections 4 are fitted on the butt end section 3 such that the inner peripheral wall of the forward end of the first auxiliary rod section 5 engages the thick rear end of the butt end section 3. This engagement maintains the auxiliary add-on rod sections 4 in the protective position.

The forward boss 5a may be formed integral with the first auxiliary rod section 5.

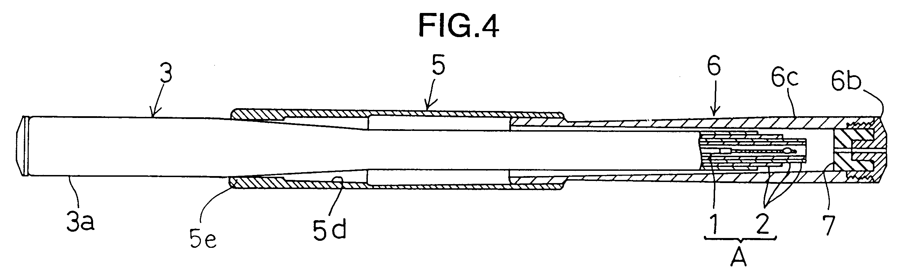

Fig. 4 shows another embodiment of the invention in which the first auxiliary rod section 5 is mounted on the second auxiliary rod section 6.

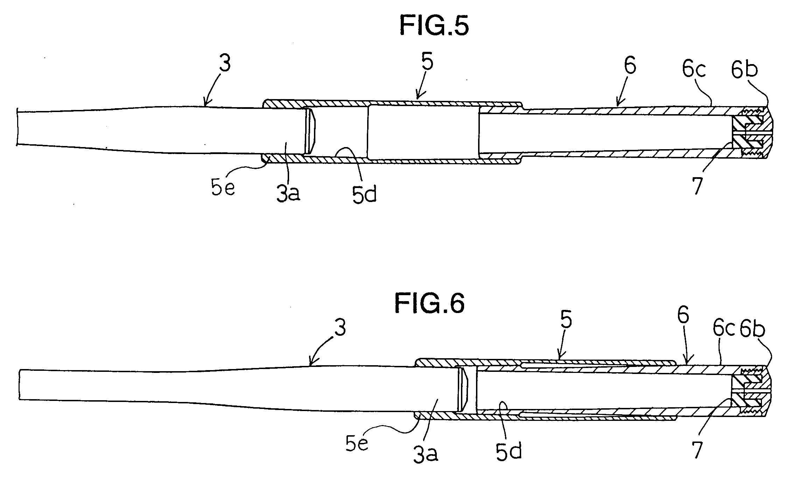

Specifically, the second auxiliary rod section 6 has a thick rear end 6c defining a flared outer peripheral wall, while the first auxiliary rod section 5 has a forward boss 5d formed on an inner peripheral wall thereof. The auxiliary add-on rod sections 4 are maintained in an extended state by engagement between an outer peripheral wall of a forward end of the second auxiliary rod section 6 and an inner peripheral wall of a rear end of the first auxiliary rod section 5. The auxiliary add-on rod sections 4 are maintained in a contracted state, as shown in Fig. 6, by fitting the outer peripheral wall of the forward end of the second auxiliary rod section 6 in the forward boss 5d of the first auxiliary rod section 5, and fitting the thick rear end 6c of the second auxiliary rod section 6 in the inner peripheral wall of the rear end of the first auxiliary rod section 5.

It is in accordance with the present invention to provide three or more auxiliary add-on rod sections 4.

## Claims

1. A fishing rod comprising:
   forward rod sections including a tip end section and tubular intermediate rod means, said intermediate rod means being maintained selectively in a position for accommodating said tip end section and in a position outwardly extending said tip end section;
   a tubular butt end section maintained selectively in a position for accommodating said intermediate rod means and in a position outwardly extending said intermediate rod means; and
   auxiliary add-on rod means connectable to said butt end section by fitting thereon from a forward end thereof to act as a protective cover for said forward rod sections, and from a rear end thereof to act as an extension from said butt end section;
   characterized in that said auxiliary add-on rod means (4) includes a first auxiliary rod section (5) and a second auxiliary rod section (6) both formed tubular and telescopically slidable relative to each other, said first auxiliary rod section being selectively fixable to a first position contained in said second auxiliary rod section and to a second position projecting from said second auxiliary rod section.

2. A fishing rod as claimed in claim 1, characterized in that said first auxiliary rod section includes a fixing portion (5e) formed in a forward end thereof for fixing the rear end of said butt end section.

3. A fishing rod as claimed in claim 1, characterized in that said second auxiliary rod section is selectively fixable to a first position contained in said first auxiliary rod section and to a second position projecting from said first auxiliary rod section.

4. A fishing rod as claimed in any one of claims 1 to 3, characterized in that said rear end of said butt end section is a flared end (3a) having an outside diameter substantially corresponding to an inside diameter of said fixing portion (5e) formed in the forward end of said first auxiliary rod section, whereby said flared rear end is engageable with said fixing portion when said auxiliary add-on rod means receives said butt end section the forward end first, and when said auxiliary add-on rod means is connected to the rear end of said butt end section.

5. A fishing rod as claimed in any one of the preceding claims, characterized in that said first auxiliary rod section includes a forward boss (5a) provided peripherally adjacent the forward end thereof, said forward boss having an outside diameter substantially corresponding to an inside diameter of a forward end of said second auxiliary rod section, whereby said forward boss is engageable with an inner peripheral wall of said forward end of said second auxiliary rod section in said first position in which said first auxiliary rod section is contained in said second auxiliary rod section.

6. A fishing rod as claimed in any one of the preceding claims, characterized in that said first auxiliary rod section includes a rear boss (5a) provided peripherally adjacent a rear end thereof, said rear boss having an outside diameter substantially corresponding to an inside diameter of a butt plug (6b) mounted in a rear end of said second auxiliary rod section, whereby said rear boss is engageable with an inner peripheral wall of said butt plug in said first position in which said first auxiliary rod section is contained in said second auxiliary rod section, and engageable with the inner peripheral wall of said forward end of said second auxiliary rod section in said second position in which said first auxiliary rod section extends from said second auxiliary rod section.

FIG.1

# FIG.2

# FIG.3

# FIG.4

EP 0 509 429 A1

FIG.5

FIG.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | FR-A-2 625 409 (DASSONVILLE)<br>--- | | A01K87/00 |
| A | US-A-2 088 132 (DOMECQ)<br>--- | | |
| A | US-A-3 468 052 (HARDESTY)<br>--- | | |
| A | FR-A-1 306 153 (LALET)<br>--- | | |
| A | GB-A-2 032 743 (GILLESPIE)<br>--- | | |
| A | GB-A-2 131 261 (MANN AVIATION LIMITED)<br>--- | | |
| A | GB-A-2 236 038 (CARROLL MCMANUS LIMITED)<br>---. | | |
| D,A | GB-A-2 209 913 (SHIMANO INDUSTRIAL COMPANY LIMITED)<br><br>----- | | |
| | | | TECHNICAL FIELDS SEARCHED (Int. Cl.5 ) |
| | | | A01K |

The present search report has been drawn up for all claims

| Place of search | Date of completion of the search | Examiner |
|---|---|---|
| THE HAGUE | 15 JUNE 1992 | VERDOODT S.J.M. |

EPO FORM 1503 03.82 (P0401)